(19) **Europäisches Patentamt / European Patent Office / Office européen des brevets**

(11) **EP 3 496 548 B2**

(12) # NEW EUROPEAN PATENT SPECIFICATION
After opposition procedure

(45) Date of publication and mention
of the opposition decision:
**28.06.2023 Bulletin 2023/26**

(45) Mention of the grant of the patent:
**18.03.2020 Bulletin 2020/12**

(21) Application number: **17751344.7**

(22) Date of filing: **02.08.2017**

(51) International Patent Classification (IPC):
**A23F 3/06** (2006.01)

(52) Cooperative Patent Classification (CPC):
**A23F 3/06**

(86) International application number:
**PCT/EP2017/069562**

(87) International publication number:
**WO 2018/033395 (22.02.2018 Gazette 2018/08)**

(54) **A PROCESS FOR MANUFACTURING A LEAF TEA PRODUCT**

VERFAHREN ZUR HERSTELLUNG EINES BLATTTEEPRODUKTS

PROCÉDÉ DE FABRICATION D'UN PRODUIT À BASE DE THÉ EN FEUILLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.08.2016 EP 16184169**

(43) Date of publication of application:
**19.06.2019 Bulletin 2019/25**

(73) Proprietors:
- **Unilever PLC**
  **London, Greater London EC4Y 0DY (GB)**
  Designated Contracting States:
  **CY GB IE MT**
- **Unilever N.V.**
  **3013 AL Rotterdam (NL)**
  Designated Contracting States:
  **AL AT BE BG CH CZ DE DK EE ES FI FR GR HR HU IS IT LI LT LU LV MC MK NL NO PL PT RO RS SE SI SK SM TR**

(72) Inventors:
- **DYKS, Andrew, James**
  **Bedford**
  **Bedfordshire MK44 1LQ (GB)**
- **NUNN, Luke, Richard**
  **Bedford**
  **Bedfordshire MK44 1LQ (GB)**
- **SHARP, David, George**
  **Bromham**
  **Bedford MK43 8JT (GB)**

(74) Representative: **Mewburn Ellis LLP**
**Aurora Building**
**Counterslip**
**Bristol BS1 6BX (GB)**

(56) References cited:
| | |
|---|---|
| WO-A1-2005/067727 | WO-A1-2005/067727 |
| WO-A1-2008/107296 | WO-A1-2014/206883 |
| WO-A1-2014/206883 | JP-A- 2012 097 042 |
| US-A- 2 278 474 | |

EP 3 496 548 B2

## Description

### Field of the invention

The present invention relates to leaf tea. More particularly it relates to post-auction processing of leaf tea.

### Background of the invention

Beverages based on the tea plant (*Camellia sinensis*) have been popular throughout the world for many hundreds of years. Tea beverages are traditionally made by infusing the dry leaves of the plant *Camellia sinensis* in boiling water.

Most of the tea consumed in the Western world is so-called black tea, which is obtained by harvesting leaves of the plant *Camellia sinensis* and withering, rolling, enzymatically oxidising (fermenting), firing and sorting them. Alternatively, the leaves can be processed without the fermentation step to produce what is known as green tea, which is widely consumed in parts of Asia. In another variation, oolong tea is prepared by partial fermentation.

When it is harvested, the tea crop has a high moisture content. To avoid deterioration of the crop during transportation, initial processing of the tea leaves must occur at or very close to the tea plantation. Thus, regardless of type, the properties of leaf tea are constrained to a certain degree by the location of production. Because of this geographical limitation, the crop processed by a given tea factory is usually limited in terms of choice of tea varieties, agronomy and the manufacturing process used, which in turn can have a marked effect on the properties (e.g. aroma, flavour, *etc.*) and hence the quality of the final product.

Leaf tea is usually sold at auction, with the highest quality teas commanding the highest prices. Indeed, there is a substantial price difference between high quality and low quality tea. Design and control of the manufacturing process is known to influence quality. This has prompted extensive research aimed at optimising manufacturing conditions so as to yield a product with the highest possible quality. However, the post-auction processing of tea has been much less extensively investigated.

Tea contains compounds which are valued for their sensory qualities. In particular, tea has a unique taste and is rich in aroma compounds. Consumers of tea are constantly looking for foods and beverages that provide new sensory experiences. There is therefore an unmet need for processes which allow the physicochemical properties of the final tea product to be tailored to the customer's requirements after manufacture on a tea plantation and thereby deliver teas for specific product applications (e.g. with modified sensorial properties). WO2005067727 discloses a process to manufacture a tea product that infuses quickly in hot or cold water and which has improved red colour.

### Summary of the invention

Tea-based beverages are traditionally produced by infusing tea leaves in hot water and separating the infusion liquor from the spent tea material. Consumers in regions with a tradition of black tea consumption often have a preference for teas with a fast infusion rate and/or a strong liquor colour.

The present inventors have found that post-auction processing of black tea under certain thermal conditions yields a black leaf tea product which can deliver a darker/redder infusion liquor without impacting the flavour of the resulting beverage. Additionally or alternatively, such processing can produce a black leaf tea product which can deliver an infusion liquor wherein for a given level of infusion solids the liquor has a more intense red colour.

Thus in a first aspect, the present invention relates to a process for manufacturing a black leaf tea product, the process comprising:

- providing black leaf tea starting material having a moisture content of less than 5 wt.%; and then
- subjecting the black leaf tea starting material to a heat treatment step by contacting it with a heated surface at a temperature of 100°C to 170°C for a duration of 2 to 25 minutes, wherein the heat treatment step is carried out using a continuous roaster and in the presence of steam, and wherein the steam is provided at a flow rate of at least 1kg per hour to less than 25kg per hour.

The end product of the process of this process is a black leaf tea product which has different properties to the starting material. Thus in a second aspect, the present invention relates to a black leaf tea product obtainable by the process of the first aspect of the invention.

### Detailed description of the invention

For the purpose of the present invention, "tea" means material from *Camellia sinensis* var. *sinensis* and/or *Camellia sinensis* var. *assamica*. The term "leaf tea" refers to leaf and/or stem material from the tea plant in an uninfused form (i.e. material which has not been subjected to a solvent extraction step). Leaf tea is dried to a moisture content of less than 5 wt.%, and the moisture content of the leaf tea will not usually be below 0.1 wt.%. Typically the leaf tea has a moisture content of 1 to 5 wt.%. In other words, the term "leaf tea" refers to the end product of tea manufacture (sometimes referred to as "made tea").

As used herein, the term "black tea" refers to substantially fermented tea, wherein "fermentation" refers to the oxidative and hydrolytic process that tea undergoes when certain endogenous enzymes and substrates are brought together. During the so-called fermentation process, colourless catechins in the leaves and/or stem are converted to a complex mixture of yellow/orange to dark brown polyphenolic substances. For example, black leaf tea can be manufactured from fresh tea material by the steps of: withering, maceration, fermentation and drying. A more detailed description of the production of black tea can be found in Chapter 14 of "Tea: Cultivation to consumption" (edited by K.C. Wilson & M.N. Clifford, published in 1992).

The starting material for the process of the present invention is black leaf tea. Black leaf tea is a readily available commercial product which can be purchased in bulk at tea auctions. In other words, the term "black leaf tea" refers to the end product of black tea manufacture (sometimes referred to as "made tea"). The black leaf tea provided as the starting material for the claimed process has a moisture content of less than 5 wt.%, preferably less than 4.5 wt.%, more preferably less than 4 wt.%. The moisture content of this black leaf tea is usually at least 0.1 wt.%, more usually at least 0.5 wt.%. Typically the black leaf tea will have a moisture content of 1 to 5 wt.%.

The end product of the process of the present invention is a black leaf tea product. This black leaf tea product is manufactured by subjecting the black leaf tea starting material to certain thermal conditions by way of a heat treatment step. Processing the black leaf tea in this way produces a black leaf tea product which has different properties to the starting material.

The heat treatment step is carried out by contacting the black leaf tea with a heated surface at a temperature of 100°C to 170°C.

The use of very high temperatures in the heat treatment step can impair the sensorial properties of the final leaf tea product. In particular, high temperatures are associated with smoky and/or burnt flavour notes. A smoky flavour is characteristic of certain types of black tea (e.g. lapsang souchong), and this flavour direction may thus be of interest from a consumer point of view. However, burnt flavour notes are undesirable. Therefore during the heat treatment step, the temperature of the heated surface does not exceed 170°C; preferably the temperature does not exceed 165°C, and more preferably the temperature does not exceed 160°C.

The temperature of the heated surface needs to be sufficient to produce a black leaf tea product which has different properties to the starting material. Without wishing to be bound by theory, it is believed that very low temperatures do not elicit appropriate changes in the starting material (e.g. with respect to infusion performance). As such, during the heat treatment step, the temperature of the heated surface is at least 100°C. Furthermore, at lower temperatures, the duration of the heating step may need to be increased. Therefore, in the interest of process efficiency, the temperature of the heated surface is preferably at least 105°C, more preferably at least 110°C, and still more preferably at least 115°C.

With regard to the temperatures of the heated surface set out above, it should be noted that any particular upper temperature can be associated with any particular lower temperature. A particularly preferred temperature range is 110°C to 160°C.

The inventors have found that even a relatively short heat treatment can elicit changes in the sensorial properties of the black leaf tea starting material. The duration of the heat treatment step is at least 2 minutes. Preferably the duration of the heat treatment step is at least 2.5 minutes, more preferably at least 3 minutes, and most preferably at least 3.5 minutes. The duration of the heat treatment step is no longer than 25 minutes, more preferably no longer than 20 minutes, and most preferably no longer than 15 minutes.

With regard to the duration of the heat treatment step, it should be noted that any particular lower time limit can be associated with any particular upper time limit. A particularly preferred duration of the heat treatment step is from 3 to 15 minutes.

In the process of the present invention, the black leaf tea is subjected to a heat treatment step in the presence of steam. The presence of steam during the process is associated with an improvement in the colour of the black leaf tea product, with higher amounts of steam generally resulting in darker leaf colour. The steam is provided at a flow rate of at least 1 kg per hour, preferably at least 2 kg per hour, and most preferably at least 5 kg per hour. However, very high levels of steam can impact the infusion performance of the black leaf tea product. Thus the steam is provided at a flow rate of less than 25 kg per hour, preferably less than 20 kg per hour, and most preferably less than 15 kg per hour.

In the process of the present invention, the black leaf tea is preferably subjected to a heat treatment step in a confined atmosphere. As used herein the term "confined atmosphere" refers to a system wherein diffusion of the gaseous medium surrounding the black leaf tea is restricted. Without wishing to be bound by theory, it is thought that such a confined atmosphere reduces the loss of volatiles from the tea material during the heat treatment step. Furthermore, prolonged heating (particularly at higher temperatures) could potentially cause over-drying the leaf tea product; a confined atmosphere is thought to mitigate this risk. Thus it is particularly preferred that the heat treatment step occurs in a confined

atmosphere if dry heat is being used. Nevertheless, the use of a confined atmosphere and steam is also envisaged.

The thermal treatment step is conveniently performed using a continuous roaster, such as the REVTECH continuous electrical roaster (REVTECH Process Systems), which combines vibration transport and heating via an electrically heated and vibrating spiral tube. The heated spiral tube of this system provides a confined atmosphere as defined above. The advantage of this type of system is that it allows the process to run continuously. A feeding system ensures a constant flow rate of black leaf tea into the roaster, the black leaf tea is transported through the heated tube by vibrations, and having undergone thermal treatment, the resulting black leaf tea product exits the system ready for packaging. Steam is injected into the roaster.

The process preferably comprises the additional and subsequent step of packaging the black leaf tea product. The black tea product is preferably packaged in an amount suitable for brewing a single serving of a tea beverage. It is preferred that the mass of the black tea product in the package is at least 1 g, as smaller amounts are difficult to accurately portion and dose. More preferably the mass is at least 1.2 g, and most preferably at least 1.4 g. It is further preferred that the mass of the black tea product in the package is less than 5 g, as larger amounts become inconvenient to store and/or handle. More preferably the mass is less than 4 g, and most preferably less than 3 g.

Since the process of the present invention is a post-auction process, it is does not need to be carried out in the proximity of a tea plantation. Indeed, whilst the starting material for the process could be a black leaf tea product from a single plantation, the process is not limited in this way. A particular advantage of the process is that the starting material can actually be a tea blend (i.e. the black leaf tea having a moisture content of less than 5 wt.% can be a tea blend).

As used herein, the term "tea blend" refers to a mixture of two or more different black leaf teas. In the tea industry, the final packaged tea product sold to the consumer is commonly produced by blending different leaf teas together. Leaf teas for a blend are typically selected according to a number of different attributes, e.g. their quality, flavour, strength, body, size of leaf and price. Tea blending is a post-auction process, and allows teas of different origins to be combined to meet consumer preferences. For example, a tea blend will often have different sensorial properties to the individual component leaf teas that are mixed to make the blend.

Additionally or alternatively, the black leaf tea product obtainable by the process of the present invention can be used as a component of a tea blend. In other words, the black leaf tea product is preferably blended with one or more additional black leaf teas. Indeed, it is envisaged that the tea blend may comprise both the black leaf tea starting material and the black leaf tea product.

As set out above, the end product of the process of the present invention is a black leaf tea product which has different properties to the starting material. Thus in a second aspect, the present invention relates to a black leaf tea product obtainable by the process of the first aspect of the invention.

The present inventors have found that the black leaf tea product obtainable by the process has different colour attributes to the black leaf tea starting material, for example in terms of leaf colour and/or infusion colour.

Colour can be expressed using the coordinates of the CIE 1976 L\*a\*b\* colour space. The CIE L\*a\*b\* colour space is organised in a cubic form. The L\* axis runs from top to bottom. The maximum value for L\* is 100 (which represents a perfect reflecting diffuser), and the minimum value for L\* is 0 (which represents black). The a\* and b\* axes have no specific numerical limits. The a\* axis extends from green (-a\*) to red (+a\*), and the b\* axis from blue (-b\*) to yellow (+b\*). CIE L\*a\*b\* values can be measured by colourimetry according to the joint ISO/CIE standard (ISO 11664-4:2008(CE); CIE S 014-4/E:2007).

The colour of the black leaf tea product can be measured using CIE L\*a\*b\* colour space. This measurement can be performed directly on the leaf tea by colourimetry (according to the joint ISO/CIE standard ISO 11664-4:2008(CE); CIE S 014-4/E:2007). Consumers tend to perceive black leaf teas with a darker appearance as being of higher quality. Thus the L\* value is of particular interest when considering the appearance of black leaf tea, since lower L\* values indicate a darker leaf colour.

The effect of the process on leaf colour can be illustrated by comparing the L\* values of the black leaf tea starting material ($L^*_{initial}$) with that of the black leaf tea product obtained by the process ($L^*_{final}$). Thus the change in leaf colour elicited by the process of the present invention ($\Delta L^*$) can be calculated as follows:

$$\Delta L^* = (L^*_{initial}) - (L^*_{final})$$

wherein positive values of $\Delta L^*$ indicate that the black leaf tea product has a darker colour than the black leaf tea starting material. Consumers can perceive relatively small differences in the L\* value for black leaf tea. In order to have a perceptibly darker colour, $\Delta L^*$ is preferably at least 1.0, more preferably at least 1.2, still more preferably at least 1.4, and most preferably at least 1.5. There is no particular upper limit for $\Delta L^*$. Preferably $\Delta L^*$ is less than 4.0, more preferably less than 3.8, still more preferably less 3.6 and most preferably less than 3.5.

The present inventors have found that the process of the present invention means that it is possible to decouple colour and solids delivered in the infusion liquor when the black leaf tea product is brewed to give a beverage. For example, the black leaf tea product can deliver an infusion liquor having a more intense red colour for a given level of infusion solids.

The properties of the infusion produced by brewing the leaf tea product in water can be easily and reliably determined experimentally. An infusion is prepared by contacting 2g of tea with 200 ml freshly boiled water for 2 mins without stirring. The colour of the infusion liquor is expressed using the coordinates CIE L*a*b* colour space, which are measured by colourimetry (according to the joint ISO/CIE standard ISO 11664-4:2008(CE); CIE S 014-4/E:2007). The amount of infusion solids can be calculated by determining the dry mass of the infusion liquor. More precisely, a 50 ml sample of the infusion liquor is taken and weighed using an accurate balance. This sample is then allowed to dry completely in an oven for 16 hours, and then re-weighed. The difference between the mass of the initial infusion liquor and the mass of the dry sample is the amount of infusion solids per 50 ml of infusion liquor, and the amount of infusion solids (in mg/ml) is subsequently calculated from this value.

Preferably contact of 2g of the black leaf tea product with 200 ml freshly boiled water for 2 minutes produces a beverage wherein the a* value per mg/ml of infusion solids (or Normalised Infusion Colour - NIC) is at least 6.5, more preferably at least 6.6, still more preferably at least 6.7. The NIC will typically be no more than 8.1, more preferably no more than 8.0, still more preferably no more than 7.9. Without wishing to be bound by theory, it is thought that brewed teas which appear strong in terms of colour (i.e. have an infusion liquor with a high degree of redness), but which do not have a sufficiently robust tea flavour may not be acceptable to consumers. A particularly preferred NIC for teas brewed under these conditions is from 6.6 to 7.9.

As set out above, the properties of the infusion liquor obtained by a standard infusion protocol (contacting of 2g of leaf tea with 200 ml of freshly boiled water for 2 minutes) can be measured. The effect of the process on the Normalised Infusion Colour can thus be illustrated by comparing the infusion colour of the black leaf tea starting material ($NIC_{initial}$) with that of the black leaf tea product obtained by the process ($NIC_{final}$). Thus the change in Normalised Infusion Colour elicited by the process of the present invention ($\Delta NIC$) can be calculated as follows:

$$\Delta NIC = (NIC_{final}) - (NIC_{initial})$$

wherein positive values of $\Delta NIC$ indicate that the black leaf tea product delivers an infusion liquor having a more intense red colour for a given level of infusion solids than the black leaf tea starting material. Preferably $\Delta NIC$ is at least 0.3, more preferably at least 0.32, still more preferably at least 0.34, and most preferably at least 0.35. Very high $\Delta NIC$ values seem to have an impact on flavour attributes, particularly flavour strength. In countries where consumers add milk to their tea, increased flavour strength may be a welcome attribute. However, for countries were the tradition is to drink tea black (i.e. without milk), increased flavour strength may be perceived less favourably. Thus in order to provide a beverage with desirably flavour strength, $\Delta NIC$ is preferably less than 1.7, more preferably less than 1.65, still more preferably less than 1.6, and most preferably less than 1.55.

To allow for long-term storage stability, the black leaf tea product of the present invention (i.e. the product obtainable from the thermal treatment process) preferably has a moisture content of from 0.1 to 5 wt.%. It will be understood that these amounts refer to the water content of the black leaf tea product prior to using the product to produce a beverage (i.e. prior to brewing). As such, it will be appreciated that the process of the present invention is not expected to have a significant impact on the moisture content of the black leaf tea, even though the process is conducted in the presence of steam. Therefore, the black leaf tea product preferably has a moisture content which is essentially the same as the moisture content of the black leaf tea starting material, and the preferred moisture contents of the starting material specified above apply *mutatis mutandis* to the black leaf tea product.

The black tea product of the present invention is optionally packaged. Non-limiting examples of suitable packaging options include infusion packets (such as tea bags), cartridges for beverage brewing machines, tea sticks, and the like.

As used herein the term "comprising" encompasses the terms "consisting essentially of" and "consisting of". All percentages and ratios contained herein are calculated by weight unless otherwise indicated. It should be noted that in specifying any range of values or amounts, any particular upper value or amount can be associated with any particular lower value or amount. Except in the operative and comparative examples, all numbers in the description indicating amounts of materials, conditions of reaction, physical properties of materials, and/or use are to be understood as being preceded by the word "about". The various features of the embodiments of the present invention referred to in individual sections above apply, as appropriate, to other sections *mutatis mutandis*. Consequently features specified in one section may be combined with features specified in other sections as appropriate. The disclosure of the invention as found herein is to be considered to cover all embodiments as found in the claims as being multiply dependent upon each other. Unless defined otherwise, all technical and scientific terms used herein have the same meaning as commonly understood by one of ordinary skill in the art in the field of tea processing.

The present invention will now be illustrated by reference to the following non-limiting examples.

**Examples**

A black leaf tea blend (PG Tips) was used as the starting material. The moisture content of the starting material was 4.5% by weight. Portions of this starting material were subjected to a heat treatment step by passing them through a REVTECH continuous electrical roaster (REVTECH Process Systems). Different heat treatment regimes were achieved by controlling the temperature of the heated surfaces, and the rate at which the material passed through the roaster. A portion of the starting material was set aside for use as a control sample; this portion was not passed through the roaster and thus was not subjected to any kind of thermal treatment.

Infusions were prepared using each of the thermally treated samples and the control sample. Each infusion was made by infusing 2 g of leaf tea in 200 ml of freshly boiled water for 2 minutes without stirring. The L*a*b* values of the resulting infusions were determined with a CIE colourimeter (Minolta). To determine the level of infusion solids, a 50 ml sample of the infusion liquor was taken and weighed using an accurate balance. This sample was then allowed to dry completely in an oven for 16 hours, and then re-weighed. The difference between the mass of the initial infusion liquor and the mass of the dry sample was used to calculate the amount of infusion solids (in mg/ml).

Samples A - G and 1, 2, 9, 10, 11, 14 and 17 do not fall within the scope of the claims and are given for reference only, whereas samples 3-8, 12-13 and 15-16 are within the scope of the claims.

Reference Example 1

Samples A, B, C, and D were produced by varying the temperature of the heated surface in the roaster and keeping the duration of the heat treatment step constant (4 minutes). These samples were produced without the injection of steam into the system. The data in Table 1 shows the results of the colour analysis using the CIE L*a*b* colour space for the leaf tea product obtained after the heat treatment, and also for infusions resulting from brewing these samples according to the brewing protocol set out above.

For the leaf tea, the coordinate L* is of particular interest, with lower L* values indicating a darker leaf colour. Consumers tend to perceive darker coloured leaf teas as being of higher quality. It can be seen that the trend is for the darkness of the leaf tea to increase (i.e. corresponding to a decrease in the leaf tea L* value) as the temperature of the heat treatment increases. In particular, it can be seen from the data in Table 1 that the Sample A leaf tea product has a similar L* value to the control material. In contrast, the Sample B, C and D leaf tea products have lower L* values than the control material, indicating that these leaf tea products are darker in colour than the control.

Table 1

| Sample | Temp. (°C) | Time (min) | Leaf tea | | | Infusion | | | | |
|---|---|---|---|---|---|---|---|---|---|---|
| | | | L* | a* | b* | L* | a* | b* | Solids (mg/ml) | NIC (a*/solids) |
| Control | - | - | 25.5 | 4.0 | 5.4 | 68.5 | 17.2 | 73.2 | 2.775 | 6.198 |
| A | 90 | 4 | 25.9 | 3.9 | 5.5 | 56.6 | 17.6 | 64.2 | 2.850 | 6.175 |
| B | 120 | 4 | 24.0 | 4.1 | 4.6 | 70.7 | 18.7 | 76.8 | 2.780 | 6.727 |
| C | 150 | 4 | 23.6 | 4.1 | 4.1 | 67.9 | 23.3 | 82.0 | 3.205 | 7.270 |
| D | 170 | 4 | 23.1 | 3.9 | 3.4 | 67.4 | 22.0 | 77.0 | 2.795 | 7.871 |

For the infusions, the coordinate a* is of particular relevance, as higher values of this coordinate indicate a redder colour (whilst lower values indicate a greener colour). It can be seen that the trend is for the redness of the infusion liquor (a* value) to increase as the temperature of the heat treatment increases. This trend is even more pronounced when the Normalised Infusion Colour is considered (a*/solids value).

The sensorial properties of the brewed teas were assessed in an informal tasting session. The observations from this session are summarised in Table 2.

Table 2

| Sample | Temp. (°C) | Time (min) | Infusion colour | Flavour |
|---|---|---|---|---|
| A | 90 | 4 | Same as control | More bitter/astringent than control |
| B | 120 | 4 | Same as control | Black tea |
| C | 150 | 4 | Darker than control | Black tea |

(continued)

| Sample | Temp. (°C) | Time (min) | Infusion colour | Flavour |
|--------|-----------|-----------|-----------------|---------|
| D | 170 | 4 | Darker than control | Stronger than control, smoky |

It can be seen from the data in Table 1 that the infusion liquor prepared from Sample A (90°C, 4 min), the data in Table 1 indicates that this has a similar degree of redness to that prepared from the control. This is in agreement with the sensorial data in Table 2, which indicates that brewed teas prepared from Sample A have a similar colour to those prepared from the control sample. Nevertheless, thermal treatment under these conditions does appear to have an effect on the taste of the resulting brewed tea, since brewed teas prepared from Sample A were perceived as being more bitter/astringent than those brewed from the control sample.

In contrast, Samples B, C and D are seen to deliver a redder infusion liquor than the control sample (a* values, Table 1). Moreover, it appears that the thermal treatment used to produce these samples delivers an infusion liquor wherein for a given level of infusion solids the liquor has a more intense red colour (NIC values, Table 1). Moreover, Samples B and C, elicit this change without impacting the flavour of the resulting beverage (Table 2). This suggests that the infusion colour and the level of tea solids released (particularly those which contribute to the flavour of the brewed beverage) have been uncoupled, and means that it is now possible to deliver a beverage with a darker/redder liquor colour without impacting the flavour of the resulting beverage. Sample D has a higher flavour strength coupled with a smoky flavour direction. This type of smoky flavour is desirable in certain types of black tea (e.g. lapsang souchong).

In conclusion, this example shows that post-auction processing of black tea under certain thermal conditions yields a black leaf tea product which can deliver a darker/redder infusion liquor either without impacting the flavour of the resulting beverage, or whilst moving the flavour in a direction that may be of interest from a consumer point of view. Furthermore, the black leaf tea products tend to have a darker leaf colour, and may thus be perceived as being of higher quality by consumers.

Reference Example 2

Samples E, F and G were produced by varying the temperature of the heated surface in the roaster and keeping the duration of the heat treatment step constant (6 minutes). These samples were produced without the injection of steam into the system

The data in Table 3 shows the results of the colour analysis using CIE L*a*b* colour space for the leaf tea product samples obtained after the heat treatment, it can be seen that the L* values for the 90°C sample (Sample E), is similar to that of the control leaf tea material. In contrast, the 120°C and 150°C samples (Samples F and G, respectively) have lower L* values than the control material, indicating that these leaf tea products are darker in colour than the control.

Table 3

| Sample | Temp. (°C) | Time (min) | Leaf tea | | | Infusion | | | | |
|--------|-----------|-----------|------|------|------|------|------|------|--------------|--------------|
| | | | L* | a* | b* | L* | a* | b* | Solids (mg/ml) | NIC (a*/solids) |
| Control | - | - | 25.5 | 4.0 | 5.4 | 68.5 | 17.2 | 73.2 | 2.775 | 6.198 |
| E | 90 | 6 | 26.6 | 4.4 | 6.1 | 65.2 | 18.5 | 74.8 | 3.125 | 5.920 |
| F | 120 | 6 | 25.1 | 4.4 | 5.1 | 57.0 | 18.3 | 63.5 | 2.730 | 6.703 |
| G | 150 | 6 | 22.8 | 4.1 | 3.5 | 60.7 | 19.8 | 68.7 | 3.020 | 6.556 |

The data in Table 3 also shows the results of the colour analysis CIE L*a*b* colour space for the infusions resulting from these samples. Once again, it can be seen that the NIC value for the 90°C sample (Sample E) is no better than that of the control, whilst the NIC value for the samples subjected to higher temperatures (Samples F and G) the trend is for a more intense red colour for a given level of infusion solids in the liquor.

In conclusion, this example shows that post-auction processing of black tea under certain thermal conditions yields a black leaf tea product with desirable liquor properties. More particularly wherein for a given level of infusion solids the liquor has a more intense red colour. This type of post-auction processing can also have a beneficial effect on the appearance of the black leaf tea.

Example 3

Samples 1 to 8 were produced by varying the temperature of the heated surface in the roaster and keeping the duration of the heat treatment step constant (4 minutes). Steam was injected into the system at a flow rate of either 5 kg/hour or 10 kg/hour. The heat treatment regimes for Samples 1 to 8 are summarised in Table 4.
Samples 1 and 2 are reference samples and are not within the scope of the claims.

Table 4

| | Sample | | | | | | | | |
|---|---|---|---|---|---|---|---|---|---|
| | Control | 1 | 2 | 3 | 4 | 5 | 6 | 7 | 8 |
| Temp (°C) | - | 90 | 90 | 120 | 120 | 150 | 150 | 170 | 170 |
| Steam (kg/h) | - | 5 | 10 | 5 | 10 | 5 | 10 | 5 | 10 |
| Time (min) | - | 4 | 4 | 4 | 4 | 4 | 4 | 4 | 4 |

The data in Table 5 shows the results of the colour analysis using CIE L*a*b* colour space for the leaf tea product obtained after the heat treatment of these samples, and also for the infusions resulting from brewing these samples according to the protocol set out above.
Once again, the coordinate L* is of particular interest for the leaf tea, with lower L* values indicating a darker leaf colour. It can be seen that the trend is for the darkness of the leaf tea to increase (i.e. corresponding to a decrease in the leaf tea L* value) as the temperature of the heat treatment increases. Furthermore, for a given temperature higher steam flow rates are associated with darker leaf tea colour (i.e. lower L* value).

Table 5

| Sample | Leaf tea | | | Infusion | | | | |
|---|---|---|---|---|---|---|---|---|
| | L* | a* | b* | L* | a* | b* | Solids (mg/ml) | NIC (a*/solids) |
| Control | 25.5 | 4.0 | 5.4 | 68.5 | 17.2 | 73.2 | 2.775 | 6.198 |
| 1 | 25.7 | 4.1 | 5.6 | 58.0 | 16.2 | 62.4 | 2.720 | 5.956 |
| 2 | 24.5 | 4.4 | 4.9 | 60.9 | 13.9 | 59.8 | 2.370 | 5.865 |
| 3 | 23.9 | 4.2 | 4.6 | 69.9 | 20.9 | 79.9 | 2.845 | 7.346 |
| 4 | 23.1 | 4.2 | 3.9 | 69.8 | 21.1 | 79.0 | 2.860 | 7.378 |
| 5 | 23.5 | 4.1 | 3.9 | 68.5 | 21.0 | 77.6 | 2.805 | 7.487 |
| 6 | 22.9 | 4.0 | 3.6 | 69.2 | 19.9 | 74.4 | 2.685 | 7.412 |
| 7 | 23.2 | 4.0 | 3.6 | 67.3 | 23.1 | 76.5 | 2.960 | 7.804 |
| 8 | 22.9 | 3.9 | 3.4 | 70.0 | 20.5 | 73.8 | 2.700 | 7.593 |

Similarly, the coordinate a* remains of particular relevance for the infusions, with higher values of this coordinate indicate a redder colour (whilst lower values indicate a greener colour). For Samples 3 to 8, the trend is for the redness of the infusion liquor (a* value) to increase as the temperature of the heat treatment increases. This trend is even more noticeable when the redness value of the infusion liquor per level of infusion solids is considered (NIC value). Furthermore, this trend is more pronounced for samples heated in the presence of steam than it is for samples heated without steam (as can be seen by comparing the data in Tables 1 and 5). However, for Samples 1 and 2 (90°C, 6 min), the opposite trend is seen and the redness value of the infusion liquor per level of infusion solids (NIC value) decreases when the samples are heated in the presence of steam. The sensorial properties of the brewed teas were assessed in an informal tasting session. The observations from this session are summarised in Table 6.

Table 6

| Sample | Temp. (°C) | Steam (kg/h) | Infusion colour | Infusion flavour |
|---|---|---|---|---|
| 1 | 90 | 5 | Same as control | Stronger than control |

(continued)

| Sample | Temp. (°C) | Steam (kg/h) | Infusion colour | Infusion flavour |
|--------|-----------|--------------|-----------------|------------------|
| 2 | 90 | 10 | Same as control | Black tea |
| 3 | 120 | 5 | Darker than control | Black tea |
| 4 | 120 | 10 | Darker than control | Black tea |
| 5 | 150 | 5 | Same as control | Black tea |
| 6 | 150 | 10 | Darker than control | Black tea |
| 7 | 170 | 5 | Darker than control | Stronger than control |
| 8 | 170 | 10 | Same as control | Black tea |

The data in Table 3 shows that samples which have been subjected to thermal treatment in the presence of steam tend to produce an infusion liquor which is perceived as being darker than that prepared from the control sample (standard PG Tips blend). This change is typically achieved without impacting the flavour of the brewed beverage. Indeed, the experimental data suggests that the infusion colour and the level of tea solids released (particularly those which contribute to the flavour of the brewed beverage) have been uncoupled.

It is notably that heat treatment at 170°C seems to have an impact on the flavour of the brewed beverage with a higher flavour strength being reported for sample 7 This is interesting, since some consumers prefer their tea to have a strong flavour - especially in countries where it is common to add milk to tea beverages.

In conclusion, this example shows that post-auction processing of black tea under certain thermal conditions in the presence of steam yields a black leaf tea product with desirable leaf appearance and liquor properties. In particular, the black leaf tea product has a darker leaf appearance and produces a liquor wherein for a given level of infusion solids the liquor has a more intense red colour. These changes are typically elicited without impacting the flavour of the resulting beverage, or whilst moving the flavour in a direction that may be of interest from a consumer point of view.

Example 4

Samples 9 to 17 were produced by varying the temperature of the heated surface in the roaster and keeping the duration of the heat treatment step constant (6 minutes). Steam was injected into the roaster at a flow rate of either 5 kg/hour, 10 kg/hour, or 30 kg/hour. The heat treatment regimes for Samples 1 to 8 are summarised in Table 7. Samples 9, 10,11, 14 and 17 are reference samples and are not within the scope of the claims.

| | Table 7 | | | | | | | | |
|--------------|---------|----|----|----|-----|-----|-----|-----|-----|
| | Control | 9 | 10 | 11 | 12 | 13 | 14 | 15 | 16 | 17 |
| Temp (°C) | - | 90 | 90 | 90 | 120 | 120 | 120 | 150 | 150 | 150 |
| Steam (kg/h) | - | 5 | 10 | 30 | 5 | 10 | 30 | 5 | 10 | 30 |
| Time (min) | - | 6 | 6 | 6 | 6 | 6 | 6 | 6 | 6 | 6 |

The data in Table 8 shows the results of the colour analysis using the CIE L*a*b* colour space for the leaf tea product obtained after the heat treatment of these samples, and also for the infusions resulting from brewing these samples according to the protocol set out above.

Table 8

| Sample | Leaf tea | | | Infusion | | | | |
|---------|------|-----|-----|------|------|------|----------------|-----------------|
| | L* | a* | b* | L* | a* | b* | Solids (mg/ml) | NIC (a*/solids) |
| Control | 25.5 | 4.0 | 5.4 | 68.5 | 17.2 | 73.2 | 2.775 | 6.198 |
| 9 | 24.9 | 4.4 | 5.1 | 66.3 | 17.7 | 73.5 | 2.920 | 6.062 |
| 10 | 24.0 | 4.4 | 4.1 | 66.8 | 15.0 | 68.0 | 2.665 | 5.629 |
| 11 | 22.8 | 4.1 | 2.9 | 72.2 | 12.5 | 65.1 | 2.570 | 4.864 |

(continued)

| Sample | Leaf tea | | | Infusion | | | | |
|---|---|---|---|---|---|---|---|---|
| | L* | a* | b* | L* | a* | b* | Solids (mg/ml) | NIC (a*/solids) |
| 12 | 24.2 | 4.3 | 4.5 | 54.9 | 17.6 | 60.9 | 2.690 | 6.543 |
| 13 | 23.4 | 4.2 | 3.8 | 57.3 | 17.4 | 61.5 | 2.640 | 6.591 |
| 14 | 23.2 | 3.9 | 3.6 | 63.7 | 12.1 | 56.6 | 2.240 | 5.402 |
| 15 | 23.0 | 3.9 | 3.1 | 61.8 | 18.7 | 67.1 | 2.830 | 6.608 |
| 16 | 22.9 | 4.1 | 3.7 | 62.7 | 18.7 | 68.4 | 2.820 | 6.631 |
| 17 | 21.8 | 3.8 | 2.2 | 71.9 | 12.9 | 64.6 | 2.495 | 5.170 |

Once again, the trend is for increased temperature of heat treatment to produce leaf teas with lower L* values (i.e. indicating a darker leaf colour). Similarly, for a given temperature this trend (i.e. lower L* value) remains more pronounced at higher steam flow rates.

The trend for infusion colour is broadly similar to the previous examples, with Samples 9 to 10 (90°C) showing a decrease in Normalised Infusion Colour (a*/solids value) such that the resulting infusion liquors have lower redness per level of infusion solids, and Samples 12, 13, 15 and 16 showing an increase in Normalised Infusion Colour (a*/solids value) such that the resulting infusion liquors have higher redness per level of infusion solids.

However, very high levels of steam appear to have an impact on the Normalised Infusion Colour of the leaf tea product, as can be seen from the data for Samples 11, 14, and 17 (steam flow rate of 30 kg/h) which all show a decrease in Normalised Infusion Colour (a*/solids value) compared to the control, regardless of the temperature used in the heat treatment regime. Without wishing to be bound by theory, the inventors' current hypothesis is that some of the soluble solids from the tea material may be solubilised into the steam during the heat treatment step, thus reducing the level of soluble solids in the final leaf tea product.

In conclusion, this example shows that post-auction processing of black tea under certain thermal conditions in the presence of steam yields a black leaf tea product with desirable leaf appearance. The infusion performance may also be improved, such that brewing the leaf tea product produces a liquor wherein for a given level of infusion solids the liquor has a more intense red colour (i.e. there is an improvement in Normalised Infusion Colour). However, whilst very high levels of steam have the greatest impact on leaf appearance, there is an associated impact on infusion performance. Nevertheless, these tea products may be interesting to consumers who prefer a weaker tea flavour (e.g. in countries where tea is typically consumed without added milk).

## Claims

1.   A process for manufacturing a black leaf tea product, the process comprising:

  • providing black leaf tea having a moisture content of less than 5 wt.% as a starting material; and then
  • subjecting the black leaf tea starting material to a heat treatment step by contacting it with a heated surface at a temperature of 100°C to 170°C for a duration of 2 to 25 minutes,

  wherein the heat treatment step is carried out using a continuous roaster and in the presence of steam, and wherein the steam is provided at a flow rate of at least 1 kg per hour to less than 25 kg per hour.

2.   A process as claimed in claim 1 wherein the duration of the heat treatment step is from 3 to 15 minutes.

3.   A process as claimed in claim 1 or claim 2 wherein the heat treatment step is carried out in a confined atmosphere.

4.   A process as claimed in any one of claims 1 to 3 wherein the heated surface is at a temperature of 110°C to 160°C.

5.   A process as claimed in any one of claims 1 to 4 wherein the black leaf tea starting material is a tea blend.

6.   A process as claimed in any one of claims 1 to 5 wherein:

- the black leaf tea starting material has an L* value of $L^*_{initial}$,
- the black leaf tea product has an L* value of $L^*_{final}$,
- $\Delta L^* = (L^*_{initial}) - \Delta L^*_{final})$, and and
- $\Delta L^*$ is at least 1.0.

7. A process as claimed in claim 6 wherein $\Delta L^*$ is less than 3.5.

8. A process as claimed in any one of claims 1 to 7 wherein:

- the black leaf tea starting material has a Normalised Infusion Colour of $NIC_{initial}$,
- the black leaf tea product has a Normalised Infusion Colour of $NIC_{final}$,
- wherein Normalised Infusion Colour is expressed in terms of a* value per mg/ml of infusion solids as determined for an infusion liquor obtained by contacting 2g of the black leaf tea starting material (for $NIC_{initial}$) or the black leaf tea product (for $NIC_{final}$) with 200 ml freshly boiled water for 2 minutes, and wherein
- $\Delta NIC = (NIC_{final}) - (NIC_{initial})$, and and
- $\Delta NIC$ is 0.3 to 1.7.

9. A process as claimed in claim 8 wherein $\Delta NIC$ is 0.32 to 1.65.

10. A process as claimed in any one of claims 1 to 9 wherein the process comprises the subsequent step of packaging the black leaf tea product.

11. A process as claimed in claim 10 wherein the black leaf tea product is packaged in an amount of 1g to 5g.

12. A black leaf tea product obtainable by the process as claimed in any one of claims 1 to 9.


**Patentansprüche**

1. Verfahren zur Herstellung eines Schwarzteeblattprodukts, wobei das Verfahren Folgendes umfasst:

das Bereitstellen von Schwarzteeblättern mit einem Feuchtigkeitsgehalt von weniger als 5 Gew.-% als Ausgangsmaterial; und dann
das Unterziehen des Schwarzteeblatt-Ausgangsmaterials einem Wärmebehandlungsschritt durch Inkontaktbringen mit einer erhitzen Oberfläche bei einer
Temperatur von 100 °C bis 170 °C für eine Dauer von 2 bis 25 min,

wobei der Wärmebehandlungsschritt unter Verwendung einer kontinuierlichen Röstmaschine und in Gegenwart von Dampf durchgeführt wird und wobei der Dampf mit einer Strömungsrate von zumindest 1 kg/h bis weniger als 25 kg/h bereitgestellt wird.

2. Verfahren nach Anspruch 1, wobei die Dauer des Wärmebehandlungsschritts 3 bis 15 min beträgt.

3. Verfahren nach Anspruch 1 oder Anspruch 2, wobei der Wärmebehandlungsschritt unter einer geschlossenen Atmosphäre durchgeführt wird.

4. Verfahren nach einem der Ansprüche 1 bis 3, wobei die erhitze Oberfläche eine Temperatur von 110 °C bis 160 °C aufweist.

5. Verfahren nach einem der Ansprüche 1 bis 4, wobei das Schwarzteeblatt-Ausgangsmaterial eine Teemischung ist.

6. Verfahren nach einem der Ansprüche 1 bis 5, wobei:

das Schwarzteeblatt-Ausgangsmaterial einen Wert L* von $L^*_{initial}$ aufweist,
das Schwarzteeblattprodukt einen Wert L* von $L^*_{final}$ aufweist,
$\Delta L^* = (L^*_{initial}) - (L^*_{final})$ und
$\Delta L^* =$ zumindest 1,0 ist.

**7.** Verfahren nach Anspruch 6, wobei $\Delta L^*$ weniger als 3,5 beträgt.

**8.** Verfahren nach einem der Ansprüche 1 bis 7, wobei:

das Schwarzteeblatt-Ausgangsmaterial eine normalisierte Aufgussfarbe $NIC_{initial}$ aufweist,
das Schwarzteeblattprodukt eine normalisierte Aufgussfarbe $NIC_{final}$ aufweist,
wobei die normalisierte Aufgussfarbe als Wert $a^*$ pro mg/ml Aufgussfeststoffe ausgedrückt wird, wie für einen Aufgusssud bestimmt, der durch Kontaktieren von 2 g Schwarzteeblatt-Ausgangsmaterial (für $NIC_{initial}$) oder Schwarzteeblattprodukt (für $NIC_{final}$) mit 200 ml frisch aufgebrühtem Wasser über 2 min erhalten wird, und wobei $\Delta NIC = (NIC_{final}) - (NIC_{initial})$ und
$\Delta NIC = 0,3$ bis 1,7 ist.

**9.** Verfahren nach Anspruch 8, wobei $\Delta NIC = 0,32$ bis 1,65 ist.

**10.** Verfahren nach einem der Ansprüche 1 bis 9, wobei das Verfahren den nachfolgenden Schritt des Verpackens des Schwarzteeblattprodukts umfasst.

**11.** Verfahren nach Anspruch 10, wobei das Schwarzteeblattprodukt in einer Menge von 1 g bis 5 g verpackt wird.

**12.** Schwarzteeblattprodukt, das durch ein Verfahren nach einem der Ansprüche 1 bis 9 erhältlich ist.


**Revendications**

**1.** Procédé pour fabriquer un produit de thé noir, le procédé comprenant :

• l'obtention de thé noir ayant une teneur en humidité inférieure à 5 % en poids en tant que matériau de départ ; et ensuite
• la soumission du matériau de départ de thé noir à une étape de traitement à la chaleur par mise en contact de celui-ci avec une surface chauffée à une température de 100°C à 170°C pendant 2 à 25 minutes.

**2.** Procédé selon la revendication 1, dans lequel la durée de l'étape de traitement à la chaleur est de 3 à 15 minutes.

**3.** Procédé selon la revendication 1 ou la revendication 2, dans lequel l'étape de traitement à la chaleur est effectuée dans une atmosphère confinée.

**4.** Procédé selon l'une quelconque des revendications 1 à 3, dans lequel la surface chauffée est à une température de 110°C à 160°C.

**5.** Procédé selon l'une quelconque des revendications 1 à 4, dans lequel le matériau de départ de thé noir est un mélange de thés.

**6.** Procédé selon l'une quelconque des revendications 1 à 5, dans lequel :

• le matériau de départ de thé noir a une valeur $L^*$ de $L^*_{initial}$,
• le produit de thé noir a une valeur $L^*$ de $L^*_{final}$
• $\Delta L^* = (L^*_{initial}) - (L^*_{final})$, et
• $\Delta L^*$ vaut au moins 1,0.

**7.** Procédé selon la revendication 6, dans lequel $\Delta L^*$ vaut moins de 3,5.

**8.** Procédé selon l'une quelconque des revendications 1 à 7, dans lequel :

• le matériau de départ de thé noir a une couleur d'infusion normalisée de $NIC_{initial}$,
• le produit de thé noir a une couleur d'infusion normalisée de $NIC_{final}$,
• dans lequel la couleur d'infusion normalisée est exprimée en termes de la valeur $a^*$ par mg/ml de solides d'infusion comme déterminé pour une liqueur d'infusion obtenue par mise en contact de 2 g du matériau de départ de thé noir (pour $NIC_{initial}$) ou du produit de thé noir (pour $NIC_{final}$) avec 200 ml d'eau fraîchement bouillie pendant 2 minutes, et dans lequel
• $\Delta$NIC = ($NIC_{final}$) - ($NIC_{initial}$), et
• $\Delta$NIC vaut de 0,3 à 1,7.

9. Procédé selon la revendication 8, dans lequel $\Delta$NIC vaut de 0,32 à 1,65.

10. Procédé selon l'une quelconque des revendications 1 à 9, lequel procédé comprend l'étape subséquente de conditionnement du produit de thé noir.

11. Procédé selon la revendication 10, dans lequel le produit de thé noir est conditionné en une quantité de 1 g à 5 g.

12. Produit de thé noir pouvant être obtenu par le procédé de l'une quelconque des revendications 1 à 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005067727 A

**Non-patent literature cited in the description**

- Tea: Cultivation to consumption. 1992